# EUROPÄISCHE PATENTANMELDUNG

(11) **EP 1 508 579 A1**
(43) Veröffentlichungstag der Anmeldung: **23.02.2005**
(21) Anmeldenummer: 04018897.1
(22) Anmeldetag: 10.08.2004
(51) Int. Cl.: C08F 255/00, C09J 151/06, C09J 191/06

(54) **Modifizierte Polyolefinwachse**

(30) Priorität: 21.08.2003 DE 10338344
(71) Anmelder: Clariant GmbH, 65929 Frankfurt am Main (DE)
(72) Erfinder: Hohner, Gerd, Dr., 86368 Gersthofen (DE)
(74) Vertreter: Mikulecky, Klaus

(57) **Zusammenfassung**

Die Erfindung betrifft radikalisch mit einer Silanverbindung modifizierte teilkristalline Polyolefin-Homo- oder Copolymerwachse mit einer Schmelzviskosität, gemessen bei 170°C, zwischen 10 und 50000 mPa.s und einer Schmelzwärme von > 10 J/g, dadurch gekennzeichnet, dass die zur Modifizierung eingesetzte Silanverbindung mindestens eine olefinische Doppelbindung und mindestens einen direkt an Silizium gebundenen Alkoxyrest enthält und dass die zur Modifizierung verwendeten Polyolefinwachse unter Verwendung eines Metallocenkatalysators hergestellt wurden.

Die Erfindung betrifft auch ein Verfahren zur Herstellung dieser Polyolefin-Homooder Copolymerwachse und ihre Verwendung.

## Beschreibung

Die vorliegende Erfindung betrifft radikalisch mit einer Silanverbindung modifizierte teilkristalline Polyolefin-Homo- oder Copolymerwachse mit einer Viskosität, gemessen bei 170°C, zwischen 10 und 50000 mPa·s und einer Schmelzwärme von > 10 J/g, ihre Herstellung und ihre Verwendung.

Die Modifizierung von Polyolefinkunststoffen durch radikalische Pfropfung mit ungesättigten Alkoxysilanen ist bekannt. Beispielsweise wird in Ullmann's Encyclopedia of Industrial Chemistry, 5. Aufl. 1993, Vol. A 24, S. 47-48 die Umsetzung von Polyethylenkunststoff mit Trimethoxyvinylsilan beschrieben. Das dabei erhaltene funktionalisierte Material kann nach entsprechender Formgebung durch Hydrolyse- und Kondensationsreaktionen vernetzt werden, um so eine Optimierung der mechanischen Eigenschaften zu erzielen ("Monosil"- bzw. "Sioplas"-Prozess).

EP-A-0 944 670 beschreibt Mischungen, die neben unmodifiziertem Polyolefin elastomere silangepfropfte Ethylen-alpha-Olefin-Copolymere mit Schmelzindices zwischen 0,1 und 500 g/10 min enthalten.

EP-A-0 827 994 beschreibt die Verwendung von silangepfropften, weitgehend amorphen Poly-α-Olefinen als Schmelzkleber. Als Poly-α-Olefine dienen ataktisches Polypropylen oder Poly-1-buten oder Co- oder Terpolymerisate aus C₄-C₁₀-α-Olefinen mit Ethylen oder Propylen, wobei letztere entweder völlig amorph sind oder allenfalls eine geringe Kristallinität aufweisen. Zur Pfropfung werden olefinisch ungesättigte Alkoxysilane eingesetzt. Über die Reaktivität der Alkoxysilangruppen wird zum einen eine Verbesserung der Kohäsion der Schmelzklebermassen durch Vernetzung, zum anderen eine Verbesserung der Adhäsion durch chemische Anbindung an die zu verklebenden Substratoberflächen erreicht, soweit diese selbst reaktiv sind. Die hier beschriebenen Modifikationsprodukte haben jedoch anwendungstechnische Nachteile, wobei insbesondere die unzureichende Lager- und Farbstabilität zu nennen sind.

Schmelzkleber sind lösemittelfreie Klebstoffe, die auf die zu verklebenden Substrate in heißem, schmelzflüssigem Zustand aufgetragen werden und die nach dem Erstarren ihre Klebewirkung entfalten. Sie werden aufgrund ihrer vielseitigen Vorteile in zunehmendem Umfang u.a. in der Verpackungs-, Möbel-, Textil- und Schuhindustrie als wirtschaftliche und umweltfreundliche Alternative zu herkömmlichen, lösemittelbasierenden Klebstoffen eingesetzt. Bestandteile üblicher Schmelzkleber-Rezepturen sind polare oder unpolare Polymere - in der Regel Ethylen-Vinylacetat-Copolymere -, Harze sowie Wachse.

Die polaren oder unpolaren Polymeren dienen als Gerüstsubstanz; sie sorgen für den kohäsiven Zusammenhalt der Klebemasse und tragen gleichzeitig zur Adhäsion zum Substrat bei. Der Harzzusatz verbessert die Adhäsionswirkung und kann auf die verschiedenen Kleberkomponenten gegebenenfalls einen verträglichkeitsvermittelnden Effekt ausüben. Wachse werden zur Modifizierung eingesetzt, können aber bei entsprechender Eignung auch als Gerüstsubstanz dienen. Sie regulieren wichtige physikalische Eigenschaften der Klebemassen wie etwa Härte, Schmelzviskosität und Erweichungspunkt und beeinflussen in ihrer Wirkung auf offene Zeit, Abbindezeit, Adhäsion, Kohäsion etc. entscheidend das anwendungstechnische Verhalten.

Als Wachse werden bisher makro- und mikrokristalline Paraffinwachse, Fischer-Tropsch-Wachse sowie Polyolefinwachse eingesetzt.

Es wurde nun überraschend gefunden, dass sich mit Silanverbindungen modifizierte Polyolefinwachse, hergestellt mit Hilfe von Metallocenkatalysatoren, in hervorragender Weise für den Einsatz in Schmelzklebermassen eignen. Die modifizierten Wachse können als solche oder in Abmischungen mit geeigneten, für Schmelzkleberkompositionen üblichen weiteren Komponenten wie Harzen, Polymeren, nicht reaktiven Polyolefinwachsen etc. verwendet werden. Solche silanmodifizierte Wachse enthaltenden Schmelzklebstoffe weisen neben den durch die chemische Reaktivität bedingten besonderen Adhäsions- und Kohäsionseigenschaften insbesondere Vorteile hinsichtlich der Lager- und Farbstabilität sowie der Abbindezeit auf.

Weiterhin eignen sich die erfindungsgemäßen silanmodifizierten Metallocenwachse auch als Haftvermittler zur Verbesserung der Faser-Matrix-Haftung bei der Compoundierung von thermoplastischen Kunststoffen, z.B. Polyamiden, Polyestern oder Polyolefinen wie Polyethylen oder Polypropylen mit Glasfasern, Naturfasern wie Flachs oder Hanf oder mit Holzmehl. Im übrigen sind die erfindungsgemäßen Wachse zur Beschichtung anderer funktioneller Oberflächen, wie z.B. Glas, Metall, cellulosehaltiger Flächen wie Papier, Karton etc. geeignet.

Gegenstand der vorliegenden Erfindung sind daher radikalisch mit einer Silanverbindung modifizierte teilkristalline Polyolefin-Homo- oder Copolymerwachse mit einer Viskosität, gemessen bei 170°C, zwischen 10 und 50000 mPa.s und einer Schmelzwärme > 10 J/g, dadurch gekennzeichnet, dass die zur Modifizierung eingesetzte Silanverbindung mindestens eine olefinische Doppelbindung und mindestens einen direkt an Silizium gebundenen Alkoxyrest enthält und dass die zur Modifizierung verwendeten Polyolefinwachse unter Verwendung eines Metallocenkatalysators hergestellt wurden.

Bevorzugt weisen die radikalisch mit einer Silanverbindung modifizierte teilkristalline Polyolefin-Homo- oder Copolymerwachse eine Schmelzviskosität, gemessen bei 170°C, zwischen 50 und 10000 mPa.s, einen Tropfpunkt oder Erweichungspunkt Ring/Kugel zwischen 75 und 170°C, bevorzugt zwischen 85 und 150°C und eine Schmelzwärme von > 20 J/g, bevorzugt > 30 J/g auf.

Bevorzugt weisen diese Polyolefin-Homo- oder Copolymerwachse eine Schmelzwärme von > 40 J/g, besonders bevorzugt > 50 J/g auf.

Da die Schmelzwärme ein Maß für die Kristallinität ist, handelt es sich damit um Wachse mit nennenswertem oder hohem Kristallinitätsgrad.

Bevorzugt ist das modifizierte Polyolefin-Homopolymerwachs aus einem 1-Olefin mit 2 bis 18 C-Atomen hergestellt.

Bevorzugt ist das modifizierte Polyolefin-Copolymerwachs aus mindestens zwei 1-Olefinen mit jeweils 2 bis 18 C-Atomen hergestellt.

Besonders bevorzugt ist das modifizierte Polyolefinwachs aus 80 bis 100 Mol-% Propylen und 0 bis 20 Mol-% Ethylen oder 80 bis 100 Mol-% Propylen und 0 bis 20 Mol-% eines C₄-C₁₀-1-Olefins hergestellt.

Bevorzugt wird bei dem erfindungsgemäßen modifizierten Polyolefinwachs für die Pfropfreaktion mindestens ein Alkoxyvinylsilan der allgemeinen Formel

CH₂=CR¹-(COO)ₓ(CₙH₂ₙ)_{y}Si(R²)_{z}(OR³)_{3-z},

eingesetzt, in der R¹ Wasserstoff oder CH₃ und R² und R³ verzweigte oder unverzweigte Alkylreste mit 1 bis 6 C-Atomen bedeuten, n = 1 bis 6 ist, x und y 0 oder 1 sind, wobei y 1 ist, wenn x 1 ist, und z 0 bis 2 ist.
Besonders bevorzugt wird beim modifizierten teilkristallines Polyolefinwachs für die Pfropfreaktion Vinyltrimethoxysilan oder Vinyltriethoxysilan eingesetzt.

Bevorzugt weist das modifizierte teilkristalline Polyolefinwachs einem Tropfpunkt zwischen 75 und 170°C auf.

Die Erfindung betrifft auch ein Verfahren zur Herstellung von radikalisch mit mindestens einer Silanverbindung modifizierten teilkristallinen Polyolefinwachsen mit einer Viskosität, gemessen bei 170°C, zwischen 10 und 50000 mPa.s und einer Schmelzwärme von > 10 J/g, durch Umsetzung eines Polyolefinwachses mit ungesättigten Silanverbindungen unter Verwendung eines Radikalstarters, wobei die zur Modifizierung verwendeten Polyolefinwachse unter Verwendung eines Metallocenkatalysators hergestellt wurden.

Bevorzugt handelt es sich bei der ungesättigten Silanverbindung um Vinyltrimethoxysilan oder Vinyltriethoxysilan.

Die Erfindung betrifft schließlich auch die Verwendung von modifizierten Polyolefinwachsen in Schmelzklebern.

Die Erfindung betrifft ebenfalls die Verwendung von modifizierten Polyolefinwachsen in Glasfasern, Naturfasern oder Holzmehl enthaltenden Kunststoffcompounds. Die Erfindung betrifft auch die Verwendung von modifizierten Polyolefinwachsen zum Verkleben von Papier, Karton, Holz, Glas, Metall, Polyamiden, Polyestern oder Polyolefinen oder teilweise oder vollständig fluorierte Olefine enthaltenden Polyolefinen.

Wie oben bereits ausgeführt, kommen als Polyolefinwachs-Rohstoffe für die Silanmodifizierung Homopolymerisate des Ethylens oder höherer 1-Olefine oder deren Copolymerisate untereinander in Frage. Als 1-Olefine werden lineare oder verzweigte Olefine mit 3 bis 18 C-Atomen, vorzugsweise 3 bis 6 C-Atomen, eingesetzt. Diese Olefine können eine mit der olefinischen Doppelbindung in Konjugation stehende aromatische Substitution aufweisen. Beispiele hierfür sind Propen, 1-Buten, 1-Hexen, 1-Octen oder 1-Octadecen sowie Styrol. Bevorzugt sind Homopolymerisate des Ethylens oder Propens oder deren Copolymerisate untereinander. Die Copolymeren bestehen zu 70 bis 99,9, bevorzugt zu 80 bis 99 Gew.-% aus einer Olefinart.

Geeignet sind Olefin-Homo- und Copolymerwachse mit einer gewichtsmittleren Molmasse M_{w} zwischen 1000 und 30000 g/mol, bevorzugt zwischen 2000 und 20000 g/mol, einer zahlenmittleren Molmasse Mₙ zwischen 500 und 20000 g/mol, bevorzugt zwischen 1000 und 10000 g/mol, einem Tropf- bzw. Erweichungspunkt Ring/Kugel zwischen 80 und 165°C, bevorzugt zwischen 90 und 160°C und einer Schmelzviskosität, gemessen bei 170°C, von maximal 40000 mPa.s, bevorzugt zwischen 100 und 20000 mPa.s.

Für die Herstellung der erfindungsgemäß verwendeten Polyolefinwachse werden Metallocenverbindungen der Formel I eingesetzt.

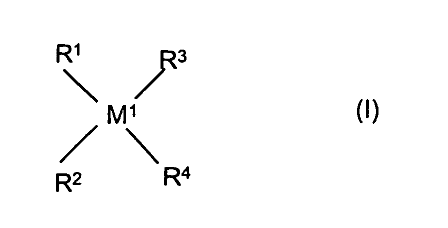

Diese Formel umfasst auch Verbindungen der Formel Ia, 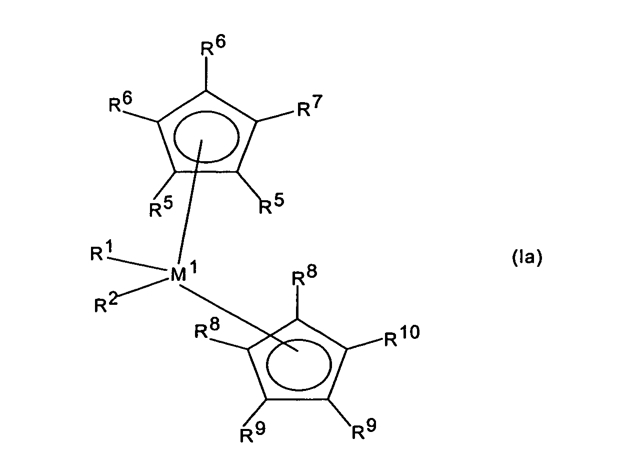 der Formel Ib 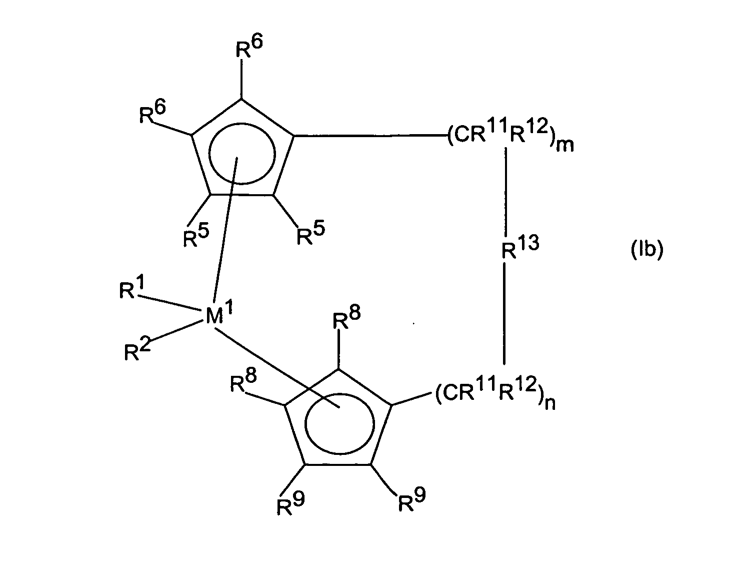 und der Formel Ic

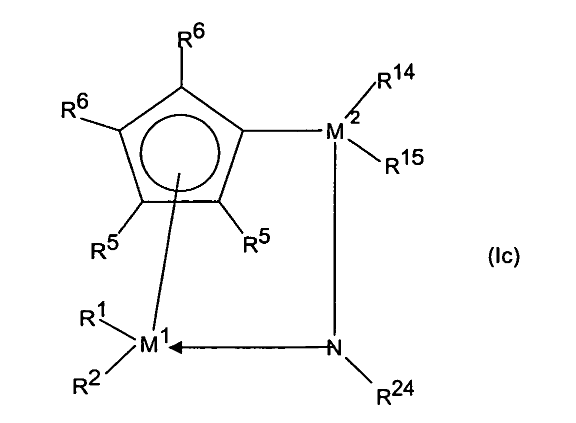

In den Formeln I, la und Ib ist M¹ ein Metall der Gruppe IVb, Vb oder VIb des Periodensystems, beispielsweise Titan, Zirkonium, Hafnium, Vanadium, Niob, Tantal, Chrom, Molybdän, Wolfram, vorzugsweise Titan, Zirkonium, Hafnium.

R¹ und R² sind gleich oder verschieden und bedeuten ein Wasserstoffatom, eine C₁-C₁₀, vorzugsweise C₁-C₃-Alkylgruppe, insbesondere Methyl, eine C₁-C₁₀, vorzugsweise C₁-C₃-Alkoxygruppe, eine C₆-C₁₀, vorzugsweise C₆-C₈-Arylgruppe, eine C₆-C₁₀-, vorzugsweise C₆-C₈-Aryloxygruppe, eine C₂-C₁₀, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 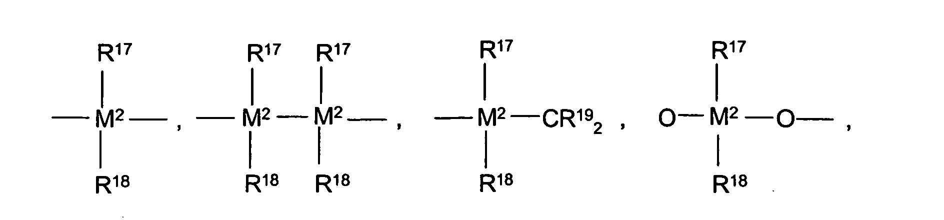 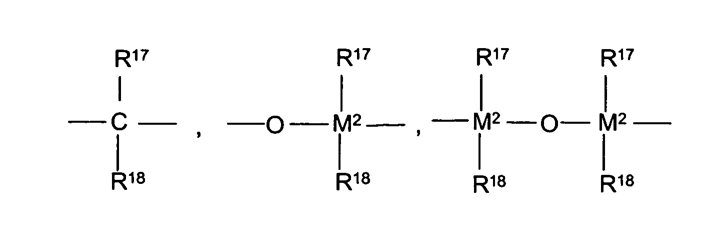 =BR¹⁷, =AIR¹⁷, -Ge-, -Sn-, -O-, -S-, =SO, =SO₂, =NR¹⁷, =CO, =PR¹⁷ oder =P(O)R¹⁷, wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹₄, R²⁰₃CBR²¹₄ oder BR²¹₃. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bis-trifluormethylphenyl, Mesityl, Xylyl oder Tolyl.

Zusätzlich ist häufig eine dritte Komponente erforderlich, um einen Schutz von polaren Katalysator-Giften aufrechtzuerhalten. Hierzu sind aluminiumorganische Verbindung wie z.B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Das Silan für die Modifizierungsreaktion enthält mindestens eine olefinische Doppelbindung, z.B. eine direkt an das Siliziumatom gebundenen Vinylgruppe und daneben mindestens eine direkt mit dem Siliziumatom verknüpfte Alkoxygruppe, beispielsweise eine Methoxy- oder Ethoxygruppe. In Frage kommen Alkoxyvinylsilane der allgemeinen Formel

CH₂=CR¹-(COO)ₓ(CₙH₂ₙ)_{y}Si(R²)_{z}(OR³)_{3-z},

in der R¹ Wasserstoff oder CH₃ und R² und R³ verzweigte oder unverzweigte Alkylreste mit 1-6 C-Atomen bedeuten, n = 1-6 ist, x und y 0 oder 1 sind, wobei y 1 ist, wenn x 1 ist, und z 0-2 ist. Als Beispiele für geeignete Silane seien Trimethoxyvinylsilan, Triethoxyvinylsilan, Methyldimethoxy- oder Methyldiethoxyvinylsilan oder 3-Methacryloxypropyltrimethoxysilan genannt. Bevorzugt sind Trimethoxyvinylsilan oder Triethoxyvinylsilan, besonders bevorzugt ist Trimethoxyvinylsilan.

Das Silan wird in einer Menge, bezogen auf eingesetztes Polyolefinwachs, von 0,1 bis 40, bevorzugt 0,5 bis 30, besonders bevorzugt 1 bis 10 Gew.-% verwendet.

Die Modifizierung wird in Gegenwart von Radikalbildnern durchgeführt. Hierfür kommen Verbindungen in Frage, die unter den Modifizierungsbedingungen in ausreichendem Maß zu Radikalen zerfallen. Geeignet sind insbesondere organische Peroxide, beispielsweise Alkyl-, Aryl- oder Aralkylperoxide wie Di-tert-butylperoxid oder Dicumylperoxid, Peroxyester wie tert.-Butylperacetat oder tert.-Butylperbenzoat oder Hydroperoxide wie tert.-Butylhydroperoxid oder Cumolhydroperoxid. Weitere mögliche Radikalbildner sind aliphatische Azoverbindungen wie Azo-bis-(2-methylpropionitril) oder 2,2'-Azo-bis-(2,4-dimethylvaleronitril). Bevorzugt sind Dialkylperoxide, besonders bevorzugt ist Di-tert.-butylperoxid. Der Radikalbildner kommt in Konzentrationen von, bezogen auf eingesetztes Polyolefinwachs, 0,1 bis 10 Gew.-% zum Einsatz.

Zur Umsetzung des Polyolefinwachses mit dem Silan wird das Wachs auf eine Temperatur oberhalb seines Schmelzpunktes erhitzt. In die Schmelze werden sowohl das Silan als auch das Peroxid getrennt oder gemeinsam eingetragen, gegebenenfalls unter Überlagerung mit Inertgas. Die Zudosierung kann kontinuierlich über einen bestimmten Zeitraum oder in einer oder mehreren Portionen erfolgen. Die Reaktionstemperatur liegt oberhalb des Schmelzpunkts des Polyolefinwachses, bevorzugt zwischen 100 und 200°C, besonders bevorzugt zwischen 130 und 180°C. Nach beendeter Zudosierung kann sich - optional nach Zugabe einer zusätzlichen Menge Radikalbildner - eine Nachreaktion bei veränderter oder unveränderter Temperatur anschließen. Während der Reaktion gebildete flüchtige Anteile bzw. nicht umgesetztes Silan können abdestilliert und/oder durch Strippung mit Inertgas abgetrennt werden.

Die Reaktion kann sowohl diskontinuierlich als auch kontinuierlich und sowohl unter Normal- als auch unter Überdruck geführt werden.

Die erfindungsgemäßen silanmodifizierten Wachse weisen eine Schmelzviskosität, gemessen bei 170°C, zwischen 10 und 50000 mPa.s, bevorzugt zwischen 50 und 10000 mPa.s, einen Tropfpunkt oder Erweichungspunkt Ring/Kugel zwischen 75 und 170°C, bevorzugt zwischen 85 und 150°C und eine Schmelzwärme von >10 J/g, bevorzugt > 20 J/g, besonders bevorzugt > 30 J/g auf sowie insbesondere > 40 J/g, besonders bevorzugt 50 J/g auf.

Die erfindungsgemäßen modifizierten Polyolefinwachse sind bei Raumtemperatur weitgehend hydrolyse- und vernetzungsstabil, können aber durch Zusatz geeigneter Katalysatoren und Einwirkung von Wasser oder Feuchtigkeit rasch zur Vernetzung gebracht werden. Als Katalysatoren kommen z.B. organische Zinnverbindungen wie Dibutylzinndilaurat, Dibutylzinndiacetat, Dibutylzinndioctoat, daneben auch anorganische Zinnverbindungen wie Zinndi- oder -tetrachlorid, Kobalt- oder Bleisalze, organische Amine wie Di- oder Trialkylamine, organische oder anorganische Protonsäuren wie p-Toluolsulfonsäure, Schwefelsäure oder Salzsäure in Frage.

### Beispiele 1 bis 4

Die Tropfpunkte wurden nach DIN 51801, die Schmelzviskositäten im Rotationsviskosimeter nach DIN 53019, die Schmelzwärmen durch Differentialthermoanalyse gemäß DIN 51007 bestimmt.

Der Tropfpunkt charakterisiert das Schmelzverhalten von festen Fetten, Schmierstoffen, Bitumina, usw. Als Tropfpunkt gilt der Temperaturpunkt, bei dem die auf die Quecksilberkugel eines Thermometers - bzw. auf daran befestigte Nippel von Tropfpunkt-Bestimmungsgeräten (z.B. nach Ubbelohde) - aufgebrachte Prüfmasse unter ihrem Eigengewicht abtropft.

Nach DIN 51801/2 wird die Tropfpunktbestimmung mit einem Tropfpunktgerät nach Ubbelohde folgendermaßen ausgeführt:
Auf den unteren Teil eines Thermometers ist eine zylindrische Hülse aus Metall gekittet, auf die eine zweite Metallhülse aufgeschraubt werden kann. Diese zweite Metallhülse hat seitlich eine kleine Öffnung zum Druckausgleich und im unteren Teil drei Sperrstifte, die vom unteren Rand der Hülse 7,5 mm entfernt sind. In die Hülse passt ein zylindrischer, nach unten sich verjüngender Nippel aus einer Kupfer-Zink-Legierung (Messing) mit einem Kupfergehalt zwischen 58 und 63 Gew.-%.
Der obere Teil der Metallhülse muss so auf das Thermometer gekittet sein, dass bei fest aufgeschraubtem Unterteil der Unterrand des Thermometergefäßes mit dem Unterrand der Metallhülse abschneidet. Die Sperrstifte in der Metallhülse gestatten, den Nippel so in die Hülse einzuführen, dass das Thermometergefäß überall gleich weit von den Wandungen des Nippels entfernt ist.
Die vorbereitete Probe wird in gießbarem Zustand in den auf der Platte stehenden Nippel so eingefüllt, dass ein Überschuss entsteht.
Der Nippel wird bei einer Temperatur, die ein Aufschieben eben noch ermöglicht, vorsichtig so auf die Halterung am Thermometer geschoben, dass das Thermometergefäß die Nippelwand nicht berührt.
Das Thermometer mit dem Nippel wird durch einen in der Mitte durchbohrten und an einer Seite eingekerbten Stopfen in der Mitte des Reagenzglases befestigt. Der Abstand zwischen Unterkante Nippel und Reagenzglas-Boden soll 25 mm betragen. Das Reagenzglas wird bis zu zwei Drittel seiner Länge lotrecht in den Becher gehängt. Der Becher enthält Eiswasser als Badflüssigkeit. Dann wird das Tropfpunktgerät so erwärmt, dass von etwa 10°C unter dem erwarteten Tropfpunkt an die Temperatur gleichmäßig um 1°C je Minute steigt.
Bei zunehmender Temperatur erweicht die Probe allmählich. Man beobachtet, bei welcher Temperatur das aus dem Nippel ausfließende Bindemittel den Boden des Reagenzglases erreicht hat.

Die Schmelzviskosität nach DIN 53019 wird wie folgt bestimmt:
Die zu untersuchende Flüssigkeit befindet sich in einem Ringspalt zwischen zwei koaxialen Zylindern, von denen der eine mit konstanter Drehzahl rotiert (Rotor), der andere ruht (Stator). Ermittelt werden die Drehzahl und das Drehmoment, das nötig ist, um den Reibungswiderstand der Flüssigkeit im Ringspalt zu überwinden. Aus den geometrischen Abmessungen des Systems sowie den ermittelten Drehmomentund Drehzahlwerten lassen sich die in der Flüssigkeit herrschende Schubspannung und das Geschwindigkeitsgefälle berechnen.

Die vorgenannte Norm beschreibt durch Festlegung bestimmter Geometrieverhältnisse ein Standardfließbild zur Messung des Fließverhaltens von newtonschen und nicht-newtonschen Flüssigkeiten in Rotationsviskosimetern mit koaxialen Zylindern.
Die Bestimmung der Schmelzwärmen durch Differentialthermoanalyse gemäß DIN 51007 wird wie folgt ausgeführt:
Die zu untersuchende Probe und die Referenzprobe werden einer Aufheizung oder einem anderen Temperaturprogramm unterzogen und die unterschiedlichen Wärmeströme (als Temperaturdifferenzen) über definierte Zeiträume gemessen. Sie können in einem Diagramm, das für jede Probe charakteristisch ist, wiedergegeben werden.

### Ausführung der Beispiele

Jeweils 500 g der in Tabelle 1 aufgeführten mit Metallocenkatalysatoren hergestellten Polyolefinwachse wurden in einer mit Rührwerk, Innenthermometer und Destillationsbrücke ausgestatteten Glasapparatur unter Stickstoffüberlagerung aufgeschmolzen. Bei einer Temperatur von 160°C wurden im Laufe von 3 h aus einem Dosiertrichter kontinuierlich die in Tabelle 2 angegebene Silanmenge zudosiert, gleichzeitig erfolgte aus einem zweiten Tropftrichter die kontinuierliche Zugabe von 10 g Di-tert.-butylperoxid. Nach Ende der Dosierung gab man weitere 1,1 g Di-tert.-butylperoxid zu dem Reaktionsgemisch und ließ 1 h bei 160°C nachreagieren. Anschließend legte man Vakuum (ca. 30 mbar) an und destillierte die flüchtigen Anteile ab. Nach ca. 30 min wurde durch Einleiten von Stickstoff auf Normaldruck entspannt. Die Eigenschaften der resultierenden Modifizierungsprodukte sind in Tabelle 2 angegeben.

**Tabelle 1**

| | Wachstyp | Visk./170°C | Tropfpunkt | Schmelzwärme |
|---|---|---|---|---|
| A | Ethylen-Homopolymerwachs | 40 | 127 | 260 |
| B | Ethylen-Propylen-Copolymerwachs | 110 | 115 | 145 |
| C | Propylen-Homopolymerwachs | 550 | 145 | 78 |
| D | Propylen-Ethylen-Copolymerwachs | 60 | 120 | 60 |
| | | mPa.s | °C | J/g |

**Tabelle 2**

| Beispiel | Eingesetztes Wachs | Silankomponente | Silaneinsatz, bez. auf Wachs | Tropfpunkt | Viskosität/ 170°C | Schmelzwärme |
|---|---|---|---|---|---|---|
| 1 | A | TMVS*) | 10 | 116 | 70 | 210 |
| 2 | B | TMVS*) | 5 | 104 | 180 | 110 |
| 3 | C | TMVS*) | 10 | 136 | 320 | 65 |
| 4 | D | TEVS**) | 10 | 111 | 60 | 40 |
| | | | Gew.-% | °C | mPa.s | J/g |

| | | | | | | |
|---|---|---|---|---|---|---|
| *) Trimethoxyvinylsilan | | | | | | |
| **) Triethoxyvinylsilan | | | | | | |

Zur Prüfung der Lagerstabilität wurde eine Probe des unter Beispiel 3 beschriebenen Wachses zu einer Platte mit einem Durchmesser von 7 cm und einer Dicke von 0,5 cm vergossen. Die Platte wurde unter Normklimabedingungen (23°C, 50 % Luftfeuchtigkeit) 8 Tage gelagert. Die Schmelzviskosität der gelagerten Probe betrug 350 mPa.s bei 170°C.

Zur Prüfung der Vernetzungsfähigkeit wurden 50 g des Wachses in der Schmelze mit 0,05 g (0,1 %) Dibutylzinndilaurat abgemischt. Es wurde eine Platte w.o. vergossen. Nach 8-tägiger Lagerung unter Normklimabedingungen war die Probe vollständig vernetzt und nicht mehr schmelzbar.

## Patentansprüche

1. Radikalisch mit einer Silanverbindung modifizierte teilkristalline Polyolefin-Homo- oder Copolymerwachse mit einer Schmelzviskosität, gemessen bei 170°C, zwischen 10 und 50000 mPa.s und einer Schmelzwärme von > 10 J/g, **dadurch gekennzeichnet, dass** die zur Modifizierung eingesetzte Silanverbindung mindestens eine olefinische Doppelbindung und mindestens einen direkt an Silizium gebundenen Alkoxyrest enthält und dass die zur Modifizierung verwendeten Polyolefinwachse unter Verwendung eines Metallocenkatalysators hergestellt wurden.

2. Radikalisch mit einer Silanverbindung modifizierte teilkristalline Polyolefin-Homo- oder Copolymerwachse nach Anspruch 1, **dadurch gekennzeichnet, dass** sie eine Schmelzviskosität, gemessen bei 170°C, zwischen 50 und 10000 mPa.s, einen Tropfpunkt oder Erweichungspunkt Ring/Kugel zwischen 75 und 170°C, bevorzugt zwischen 85 und 150°C und eine Schmelzwärme von > 20 J/g, bevorzugt > 30 J/g aufweisen.

3. Modifiziertes Polyolefin-Homopolymerwachs nach Anspruch 1 oder 2, **dadurch gekennzeichnet, dass** sie eine Schmelzwärme von > 40 J/g, bevorzugt > 50 J/g aufweisen.

4. Modifiziertes Polyolefin-Homopolymerwachs nach einem oder mehreren der Ansprüche 1 bis 3, hergestellt aus einem 1-Olefin mit 2 bis 18 C-Atomen.

5. Modifiziertes Polyolefin-Copolymerwachs nach einem oder mehreren der Ansprüche 1 bis 3, hergestellt aus mindestens zwei 1-Olefinen mit jeweils 2 bis 18 C-Atomen.

6. Modifiziertes Polyolefinwachs nach einem oder mehreren der Ansprüche 1 bis 5, hergestellt aus 80 bis 100 Mol-% Propylen und 0 bis 20 Mol-% Ethylen oder 80 bis 100 Mol-% Propylen und 0 bis 20 Mol-% eines C₄-C₁₀-1-Olefins.

7. Modifiziertes Polyolefinwachs nach einem oder mehreren der Ansprüche 1 bis 6, wobei für die Pfropfreaktion mindestens ein Alkoxyvinylsilan der allgemeinen Formel
CH₂=CR¹-(COO)ₓ(Cₙ-H₂ₙ)_{y}Si(R²)_{z}(OR³)_{3-z}
eingesetzt wird, in der R¹ Wasserstoff oder CH₃ und R² und R³ verzweigte oder unverzweigte Alkylreste mit 1 bis 6 C-Atomen bedeuten, n = 1 bis 6 ist, x und y 0 oder 1 sind, wobei y 1 ist, wenn x 1 ist, und z 0 bis 2 ist.

8. Modifiziertes teilkristallines Polyolefinwachs nach einem oder mehreren der Ansprüche 1 bis 7, wobei für die Pfropfreaktion Vinyltrimethoxysilan oder Vinyltriethoxysilan eingesetzt wird.

9. Modifiziertes teilkristallines Polyolefinwachs nach einem oder mehreren der Ansprüche 1 bis 8 mit einem Tropfpunkt zwischen 75 und 170°C.

10. Verfahren zur Herstellung von radikalisch mit mindestens einer Silanverbindung modifizierten teilkristallinen Polyolefinwachsen mit einer Viskosität, gemessen bei 170°C, zwischen 10 und 50000 mPa.s und einer Schmelzwärme von > 10 J/g, durch Umsetzung eines Polyolefinwachses mit ungesättigten Silanverbindungen unter Verwendung eines Radikalstarters, wobei die zur Modifizierung verwendeten Polyolefinwachse unter Verwendung eines Metallocenkatalysators hergestellt wurden.

11. Verfahren nach Anspruch 10, **dadurch gekennzeichnet, dass** es sich bei der ungesättigten Silanverbindung um Vinyltrimethoxysilan oder Vinyltriethoxysilan handelt.

12. Verwendung von modifizierten Polyolefinwachsen nach mindestens einem der Ansprüche 1 bis 9 in Schmelzklebern.

13. Verwendung von modifizierten Polyolefinwachsen nach mindestens einem der Ansprüche 1 bis 9 in Glasfasern, Naturfasern oder Holzmehl enthaltenden Kunststoffcompounds.

14. Verwendung von modifizierten Polyolefinwachsen nach mindestens einem der Ansprüche 1 bis 9 zum Verkleben von Papier, Karton, Holz, Glas, Metall, Polyamiden, Polyestern oder Polyolefinen oder teilweise oder vollständig fluorierte Olefine enthaltenden Polyolefinen.
